(19) Europäisches Patentamt
European Patent Office
Office européen des brevets

(11) **EP 2 751 904 B1**

(12) **EUROPEAN PATENT SPECIFICATION**

(45) Date of publication and mention
of the grant of the patent:
**07.03.2018 Bulletin 2018/10**

(51) Int Cl.:
*H02K 5/24* *(2006.01)*          *H02K 15/03* *(2006.01)*
*H02K 7/18* *(2006.01)*          *F03D 9/00* *(2016.01)*

(21) Application number: **12842565.9**

(22) Date of filing: **16.10.2012**

(86) International application number:
**PCT/FI2012/050989**

(87) International publication number:
**WO 2013/057371 (25.04.2013 Gazette 2013/17)**

(54) **ELECTRIC MACHINE WITH DAMPENING MEANS**

ELEKTRISCHE MASCHINE MIT DÄMPFUNGSMITTELN

MACHINE ÉLECTRIQUE AVEC MOYEN D'AMORTISSEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.10.2011 EP 11185420**

(43) Date of publication of application:
**09.07.2014 Bulletin 2014/28**

(73) Proprietor: **ABB Schweiz AG
5400 Baden (CH)**

(72) Inventors:
• **ROIVAINEN, Janne**
  **FI-00380 Helsinki (FI)**
• **MANTERE, Juhani**
  **FI-00380 Helsinki (FI)**
• **SZUCS, Aron**
  **FI-00380 Helsinki (FI)**

(74) Representative: **Kolster Oy Ab
(Salmisaarenaukio 1)
P.O. Box 204
00181 Helsinki (FI)**

(56) References cited:
**GB-A- 2 393 586          JP-A- H0 759 315
JP-A- 2010 011 686      KR-B1- 100 718 164
US-A- 2 945 138          US-A- 3 527 969
US-A- 4 617 484          US-A- 4 617 484
US-A1- 2004 207 274    US-A1- 2004 207 274
US-A1- 2011 123 339**

• **M. D. RAO: "RECENT APPLICATIONS OF
VISCOELASTIC DAMPING FOR NOISE CONTROL
IN AUTOMOBILES AND COMMERCIAL
AIRPLANES", JOURNAL OF SOUND AND
VIBRATION, vol. 262, 28 March 2003 (2003-03-28),
pages 457-474, XP002676402,**

**Description**

FIELD OF THE INVENTION

The present invention relates to suppression of vibrations in a rotating electric machine.

Vibrations of a rotating electric machine may have several different sources such as unbalance in a rotor, magnetic forces due to imperfect magnetic design, external excitation, or magnetic forces caused by air-gap anomalies due to overhang of an outer rotor of the rotating electric machine combined with gravitational pull.

Vibrations cause significant problems in known rotating electric machines. Vibrations may cause excessive noise. Vibrations may also shorten operating life of rotating electric machines.

BACKGROUND OF THE INVENTION

The invention utilizes a constrained-layer damping technique which is described for example in following documents.

> [1] Cremer, L. & Heckl, M. & Ungar, E.E., 1987. Structure-Borne Sound. 2nd ed. Berlin: Springer Verlag.
> [2] Ewins, D.J., 2001. Modal Testing, Theory, Practice, and Application. 2nd ed. Hertfordshire, England: Research Studies Press ltd.
> [3] Garibaldi, L. & Onah, H.N., 1996. Viscoelastic Material Damping Technology. Torino: Becchis Osiride.

There exist a great number of mathematical formulations to describe the dampening mechanisms of a material. Herein, a hysteretical damping model is used. The hysteretical damping model is also called as a structural damping model. For hysteretically damped isotropic material, the complex Young's modulus E* and Shear modulus G* are defined as

$$E^* = E(1+j\eta)$$

$$G^* = G(1+j\eta),$$

where E is the real Young's modulus, G is the real shear modulus and $\eta$ is the material loss factor. Above definitions can be found in reference [3], on page 30.

Examples of known electric machines are described in publications US 2004/207274, US 4 617 484. ,US2011123339 and GB2393586 Viscoelastic damping is known, for example, from publication M. D. RAO: "RECENT APPLICATIONS OF VISCOELASTIC DAMPING FOR NOISE CONTROL IN AUTOMOBILES AND COMMERCIAL AIRPLANES", JOURNAL OF SOUND AND VIBRATION, vol. 262, 28 March 2003 (2003-03-28), pages 457-474, XP002676402.

BRIEF DESCRIPTION OF THE INVENTION

An object of the present invention is to provide an outer rotor electric machine so as to alleviate the above vibration problems. The object of the invention is achieved by an electric machine which is characterized by what is stated in the independent claim 1. The preferred embodiments of the invention are disclosed in the dependent claims.

The invention is based on the idea of providing an outer rotor of an electric machine with one or more dampers connected to an annular end plate of the outer rotor, the one or more dampers utilizing constrained-layer damping technique, wherein the outer rotor is supported to a support frame of the electric machine exclusively at one end by a bearing located at an opposed end of the outer rotor relative to the annular end plate.

An advantage of the invention is that vibrations of an outer rotor electric machine may be suppressed thereby reducing noise and extending the operating life of the electric machine.

BRIEF DESCRIPTION OF THE DRAWINGS

In the following the invention will be described in greater detail by means of preferred embodiments with reference to the attached drawings, in which

> Figure 1 shows a cross section of an electric machine according to an embodiment of the present invention;
> Figure 2A shows dampening means of the electric machine of Figure 1;
> Figure 2B shows dampening means of an electric machine according to further embodiment of the present invention; and
> Figure 2C shows dampening means of an electric machine according to another embodiment of the present invention.

DETAILED DESCRIPTION OF THE INVENTION

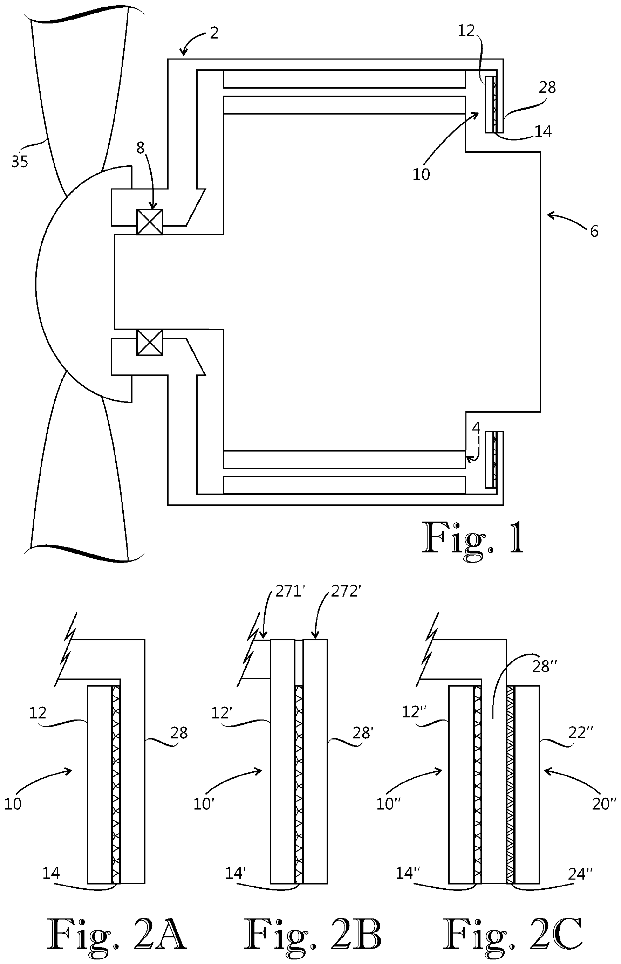

Figure 1 shows an electric machine comprising a support frame 6, an outer rotor 2, a stator 4, and dampening means. The outer rotor 2 and the stator 4 are supported to the support frame 6. The stator 4 is immovably supported to the support frame 6 whereas the outer rotor 2 is rotatably supported to the support frame 6. The dampening means is adapted for dampening vibrations of the outer rotor. Herein an outer rotor refers to a rotor that is located radially farther from centre line of an electric machine than the stator of the electric machine.

Figure 2A is an enlargement showing dampening means of the electric machine of Figure 1. The dampening means comprises a first damper 10 having a first constraint element 12 and a first visco-elastic layer 14

provided on a surface of the first constraint element 12, the first constraint element 12 being connected to the outer rotor through the first visco-elastic layer 14. The first damper 10 is adapted for damping radial vibrations of the outer rotor 2. The first constraint element 12 is a monolithic element having a form of an annular ring. Also the first visco-elastic layer 14 has a form of an annular ring. The first constraint element 12 may be manufactured from steel or aluminium, for example. In embodiments where it is not possible to construct a first constraint element as a monolithic element, the parts of the first constraint element should be joined together rigidly.

The outer rotor 2 comprises an annular end plate 28, the first damper 10 being connected to the annular end plate 28. The annular end plate 28 may be made of steel or aluminium. A symmetry axis of the annular end plate 28 coincides with rotation axis of the outer rotor 2. Thus a plane defined by the annular end plate 28 extends perpendicular to the rotation axis of outer rotor 2.

The outer rotor 2 is supported to the support frame 6 exclusively at one end by a bearing 8 located at an opposed end of the outer rotor 2 relative to the annular end plate 28. The bearing 8 may comprise one or more bearing units. A bearing unit may comprise for example a ball bearing or a cylindrical bearing.

The annular end plate 28 and the bearing 8 are spaced apart in axial direction of the outer rotor machine. Active parts of the outer rotor 2 and the stator 4 are situated between the annular end plate 28 and the bearing 8 when seen in the axial direction, the active parts being the components adapted to interact magnetically during operation of the machine.

The proper design method, also known as Master Curve Procedure using International Plot, for optimizing the damping capacity vs. temperature and frequency is explained thoroughly in reference [3], on pages 101-110. The reference [3], which is identified in section Background of the Invention, discloses that the material loss factor has a property of reaching a maximum value at certain temperature and frequency. In other words the material loss factor is a function on temperature and frequency.

To ensure an adequate damping capacity of the first damper 10 maximum loss factor $\eta_{fvel\_max}$ of the first visco-elastic layer 14 is greater than or equal to 0,7. Both the maximum loss factor $\eta_{fce\_max}$ of the first constraint element 12 and the maximum loss factor $\eta_{vpc\_max}$ of the outer rotor 2 are substantially less than the maximum loss factor $\eta_{fvel\_max}$ of the first visco-elastic layer 14.

In an alternative embodiment maximum loss factor of the first visco-elastic layer is greater than or equal to 0,9. Basically, the higher the maximum loss factor of a visco-elastic layer is the more effective the damping is.

In the embodiment shown in Figure 1 the outer rotor 2 is a one-piece component, the annular end plate 28 being an integral part of the outer rotor 2. The first constraint element 12 is connected to the outer rotor 2 exclusively through the first visco-elastic layer 14. There are no bolts, screws or other stiff particles connecting the first constraint element 12 to the outer rotor 2. The first visco-elastic layer 14 is a one-piece layer.

Figure 2B shows dampening means of an electric machine according to further embodiment of the present invention. In Figure 2B the outer rotor comprises a first portion 271' and a second portion 272', the first damper 10' being located between the first portion 271' of the outer rotor and the second portion 272' of the outer rotor such that the first damper 10' separates the first portion 271' of the outer rotor from the second portion 272' of the outer rotor, the second portion 272' of the outer rotor being connected to the first constraint element 12' through the first visco-elastic layer 14'. The first portion 271' of the outer rotor comprises a cylindrical body. The first constraint element 12' is joined rigidly to the first portion 271' of the outer rotor for example by welding or by screws. Alternatively the first constraint element 12' may be an integral part of the first portion 271' of the outer rotor. The second portion 272' of the outer rotor comprises an annular end plate 28'.

Figure 2C shows dampening means of an electric machine according to another embodiment of the present invention. The dampening means of Figure 2C comprises a first damper 10" and a second damper 20" connected to an annular end plate 28" of an outer rotor. The first damper 10" includes a first constraint element 12" and a first visco-elastic layer 14" provided on a surface of the first constraint element 12", the first constraint element 12" being connected to the annular end plate 28" through the first visco-elastic layer 14". The second damper 20" comprises a second constraint element 22" and a second visco-elastic layer 24" provided on a surface of the second constraint element 22", the second constraint element 22" being connected to the outer rotor through the second visco-elastic layer 24". Both the first constraint element 12" and the second constraint element 22" are substantially annular components. The annular end plate 28" is sandwiched between the first damper 10" and the second damper 20".

Both the maximum loss factor $\eta_{fvel-2\_max}$ of the first visco-elastic layer 14" and the maximum loss factor $\eta_{svel-2\_max}$ of the second visco-elastic layer 24" are greater than or equal to 0,7. The maximum loss factor $\eta_{fce-2\_max}$ of the first constraint element 12", the maximum loss factor $\eta_{sce-2}$ of the second constraint element 22" and the maximum loss factor $\eta_{vpc-2\_max}$ of the outer rotor each are substantially less than 0,7.

The first damper 10" is optimized for a first temperature $T_1$ and a first frequency $f_1$. The second damper 20" is optimized for a second temperature $T_2$ and a second frequency $f_2$. The second temperature $T_2$ is different from the first temperature $T_1$, and the second frequency $f_2$ is different from the first frequency $f_1$. Herein a damper is considered to be optimized for a certain temperature and a certain frequency if the material loss factor of the visco-elastic layer of the damper reaches its maximum value at said temperature and frequency.

Dampening means comprising a plurality of dampers may be configured such that each of the dampers is optimized for a different temperature-frequency pair than rest of the dampers. Thereby maximum dampening range of the dampening means may be widened.

In the embodiment of Figure 1 the outer rotor electric machine is configured as an electric generator of a wind power plant. The outer rotor 2 is adapted to be in direct contact with the surrounding air. Blades 35 of wind turbine are located at the same end of the outer rotor 2 as the bearing 8. In Figure 1 the blades 35 are depicted only partially. In an alternative embodiment an electric machine according to present invention is configured as a belt-roller motor adapted to be used in heavy steel industry.

An annular end plate of an outer rotor of a wind generator may be equipped with a brake disc for braking the outer rotor. The first damper may be located outer in radial direction than the brake disc. In some cases it is possible to retrofit a first damper according to present invention to an annular end plate of an outer rotor of an existing wind generator.

It will be obvious to a person skilled in the art that the inventive concept can be implemented in various ways. The invention and its embodiments are not limited to the examples described above but may vary within the scope of the claims.

## Claims

1. An electric machine comprising a support frame (6), an outer rotor (2), a stator (4), and dampening means, the outer rotor (2) and the stator (4) being supported to the support frame (6), the dampening means being adapted for dampening vibrations of the outer rotor, wherein the outer rotor (2) comprises an annular end plate (28), a plane defined by the annular end plate (28) extends perpendicular to the rotation axis of the outer rotor (2), the dampening means is connected to the annular end plate (28) and comprises a first damper (10; 10'; 10") having a first constraint element (12; 12'; 12") and a first visco-elastic layer (14; 14'; 14") provided on a surface of the first constraint element (12; 12'; 12"), the first constraint element (12; 12'; 12") being connected to the annular end plate (28) through the first visco-elastic layer (14; 14'; 14"), active parts of the outer rotor (2) and the stator (4) are situated between the annular end plate (28) and a bearing (8) when seen in the axial direction, the active parts being the components adapted to interact magnetically during operation of the machine, the outer rotor (2) is supported to the support frame (6) exclusively at one end by the bearing (8) located at an opposed end of the outer rotor (2) relative to the annular end plate (28), and the first constraint element (12; 12") is connected to the annular end plate (28) of the outer rotor exclusively through the first visco-elastic layer (14; 14").

2. An electric machine according to claim 1, **characterized in that** the maximum loss factor ($\eta_{fvel\_max}$) of the first visco-elastic layer (14; 14'; 14") is greater than or equal to 0,7.

3. An electric machine as claimed in claim 1 or 2, **characterized in that** the maximum loss factor ($\eta_{fce\_max}$) of the first constraint element (12; 12'; 12") is substantially less than the maximum loss factor ($\eta_{fVel\_max}$) of the first visco-elastic layer (14; 14'; 14").

4. An electric machine as claimed in any one of the preceding claims, **characterized in that** the maximum loss factor ($\eta_{vpc\_max}$) of the outer rotor is substantially less than the maximum loss factor ($\eta_{fvel\_max}$) of the first visco-elastic layer (14; 14'; 14").

5. An electric machine as claimed in any one of the preceding claims, **characterized in that** the first constraint element (12; 12'; 12") is a monolithic element.

6. An electric machine as claimed in any one of the preceding claims, **characterized in that** the dampening means further comprises a second damper (20") having a second constraint element (22") and a second visco-elastic layer (24") provided on a surface of the second constraint element (22"), the second constraint element (22") being connected to the annular end plate (28") through the second visco-elastic layer (24").

7. An electric machine according to claim 6, **characterized in that** the first damper (10") is optimized for a first temperature ($T_1$) and a first frequency ($f_1$), and the second damper (20") is optimized for a second temperature ($T_2$) and a second frequency ($f_2$), the second temperature ($T_2$) being different from the first temperature ($T_1$), and the second frequency ($f_2$) being different from the first frequency ($f_1$).

8. A wind power plant for converting wind energy into electric energy, the wind power plant comprising an electric generator, **characterized in that** the electric generator is an electric machine according to any one of claims 1 to 7.

## Patentansprüche

1. Elektrische Maschine, umfassend einen Trägerrahmen (6), einen Außenrotor (2), einen Stator (4) und ein Dämpfungsmittel, wobei der Außenrotor (2) und der Stator (4) an dem Trägerrahmen (6) befestigt sind, das Dämpfungsmittel zum Dämpfen von Schwingungen des Außenrotors angepasst ist, wobei der Außenrotor (2) eine ringförmige Endplatte (28) umfasst, eine durch die ringförmige Endplatte (28) definierte Ebene sich senkrecht zur Drehachse des Außenrotors (2) erstreckt, das Dämpfungsmittel mit der ringförmigen Endplatte (28) verbunden ist und einen ersten Dämpfer (10; 10'; 10") mit einem ersten Halteelement (12; 12'; 12") und einer ersten viskoelastischen Schicht (14; 14'; 14"), die auf einer Oberfläche des ersten Halteelements (12; 12'; 12") vorgesehen ist, umfasst, wobei das erste Halteelement (12; 12'; 12") mit der ringförmigen Endplatte (28) durch die erste viskoelastische Schicht (14; 14'; 14") verbunden ist, aktive Teile des Außenrotors (2) und des Stators (4) sich in axialer Richtung betrachtet zwischen der ringförmigen Endplatte (28) und einem Lager (8) befinden, wobei die aktiven Teile jene Komponenten sind, die angepasst sind, während des Betriebs der Maschine magnetisch zu wechselwirken, der Außenrotor (2) an dem Trägerrahmen (6) ausschließlich an einem Ende durch das an einem gegenläufigen Ende des Außenrotors (2) in Bezug zu der ringförmigen Endplatte (28) angeordnete Lager (8) befestigt ist und das erste Halteelement (12; 12") mit der ringförmigen Endplatte (28) des Außenrotors ausschließlich durch die erste viskoelastische Schicht (14; 14") verbunden ist.

2. Elektrische Maschine nach Anspruch 1, **dadurch gekennzeichnet, dass** der maximale Verlustfaktor ($\eta_{fvel\_max}$) der ersten viskoelastischen Schicht (14; 14'; 14") größer oder gleich 0,7 ist.

3. Elektrische Maschine nach Anspruch 1 oder 2, **dadurch gekennzeichnet, dass** der maximale Verlustfaktor ($\eta_{fce\_max}$) des ersten Halteelements (12; 12'; 12") wesentlich geringer ist als der maximale Verlustfaktor ($\eta_{fvel\_max}$) der ersten viskoelastischen Schicht (14; 14'; 14").

4. Elektrische Maschine nach einem der vorstehenden Ansprüche, **dadurch gekennzeichnet, dass** der maximale Verlustfaktor ($\eta_{vpc\_max}$) des Außenrotors wesentlich geringer ist als der maximale Verlustfaktor ($\eta_{fvel\_max}$) der ersten viskoelastischen Schicht (14; 14'; 14").

5. Elektrische Maschine nach einem der vorstehenden Ansprüche, **dadurch gekennzeichnet, dass** das erste Halteelement (12; 12'; 12") ein monolithisches Element ist.

6. Elektrische Maschine nach einem der vorstehenden Ansprüche, **dadurch gekennzeichnet, dass** das Dämpfungsmittel weiter einen zweiten Dämpfer (20") mit einem zweiten Halteelement (22") und einer zweiten viskoelastischen Schicht (24"), die auf einer Oberfläche des zweiten Halteelements (22") vorgesehen ist, umfasst, wobei das zweite Halteelement (22") mit der ringförmigen Endplatte (28) durch die zweite viskoelastische Schicht (24") verbunden ist.

7. Elektrische Maschine nach Anspruch 6, **dadurch gekennzeichnet, dass** der erste Dämpfer (10") für eine erste Temperatur ($T_1$) und eine erste Frequenz ($f_1$) optimiert ist und der zweite Dämpfer (20") für eine zweite Temperatur ($T_2$) und eine zweite Frequenz ($f_2$) optimiert ist, wobei die zweite Temperatur ($T_2$) sich von der ersten Temperatur ($T_1$) unterscheidet und die zweite Frequenz ($f_2$) sich von der ersten Frequenz ($f_1$) unterscheidet.

8. Windkraftanlage zum Umwandeln von Windenergie in elektrische Energie, wobei die Windkraftanlage einen elektrischen Generator umfasst, **dadurch gekennzeichnet, dass** der elektrische Generator eine elektrische Maschine nach einem der Ansprüche 1 bis 7 ist.

**Revendications**

1. Machine électrique comprenant un châssis de support (6), un rotor externe (2), un stator (4) et des moyens d'amortissement, le rotor externe (2) et le stator (4) étant supportés sur le châssis de support (6), les moyens d'amortissement étant à même d'amortir les vibrations du rotor externe, dans laquelle le rotor externe (2) comprend une plaque d'extrémité annulaire (28), un plan défini par la plaque d'extrémité annulaire (28) s'étend perpendiculairement à l'axe de rotation du rotor externe (2), les moyens d'amortissement sont raccordés à la plaque d'extrémité annulaire (28) et comprennent un premier amortisseur (10 ; 10' ; 10") ayant un premier élément de contrainte (12 ; 12' ; 12") et une première couche viscoélastique (14 ; 14', 14") appliquée sur une surface du premier élément de contrainte (12 ; 12' ; 12"), le premier élément de contrainte (12 ; 12' ; 12") étant raccordé à la plaque d'extrémité annulaire (28) via la première couche viscoélastique (14 ; 14', 14"), des parties actives du rotor externe (2) et du stator (4) sont situées entre la plaque d'extrémité annulaire (28) et un palier (8) lorsqu'on les observe dans la direction axiale, les parties actives étant les composants qui sont à même d'interagir magnétiquement au cours du fonctionnement de la machine, le rotor externe (2) est supporté sur le châssis de support (6) exclusivement à une extrémité par le palier (8) situé à une extrémité opposée du rotor externe (2) par rapport à la plaque d'extrémité annulaire (28) et le premier élément de contrainte (12 ; 12") est raccordé à la plaque d'extrémité annulaire (28) du rotor externe exclusivement via la première couche viscoélastique (14 ; 14").

**2.** Machine électrique selon la revendication 1, **caractérisée en ce que** le facteur de perte maximale ($\eta_{fvel\_max}$) de la première couche viscoélastique (14; 14'; 14") est supérieur ou égal à 0,7.

**3.** Machine électrique selon la revendication 1 ou 2, **caractérisée en ce que** le facteur de perte maximal ($\eta_{fce\_max}$) du premier élément de contrainte (12 ; 12' ; 12") est sensiblement inférieur au facteur de perte maximal ($\eta_{fvel\_max}$) de la première couche viscoélastique (14 ; 14', 14").

**4.** Machine électrique selon l'une quelconque des revendications précédentes, **caractérisée en ce que** le facteur de perte maximal ($\eta_{vpc\_max}$) du rotor externe est sensiblement inférieur au facteur de perte maximal ($\eta_{fvel\_max}$) de la première couche viscoélastique (14 ; 14' ; 14").

**5.** Machine électrique selon l'une quelconque des revendications précédentes, **caractérisée en ce que** le premier élément de contrainte (12 ; 12' ; 12") est un élément monolithique.

**6.** Machine électrique selon l'une quelconque des revendications précédentes, **caractérisée en ce que** les moyens d'amortissement comprennent en outre un second amortisseur (20") ayant un second élément de contrainte (22") et une seconde couche viscoélastique (24") appliquée sur une surface du second élément de contrainte (22 "), le second élément de contrainte (22") étant raccordé à la plaque d'extrémité annulaire (28") via la seconde couche viscoélastique (24").

**7.** Machine électrique selon la revendication 6, **caractérisée en ce que** le premier amortisseur (10") est optimisé pour une première température ($T_1$) et une première fréquence ($f_1$) et le second amortisseur (20") est optimisé pour une seconde température ($T_2$) et une seconde fréquence ($f_2$), la seconde température ($T_2$) étant différente de la première température ($T_1$) et la seconde fréquence ($f_2$) étant différente de la première fréquence ($f_1$).

**8.** Centrale éolienne pour convertir de l'énergie éolienne en énergie électrique, la centrale éolienne comprenant un générateur électrique, **caractérisée en ce que** le générateur électrique est une machine électrique selon l'une quelconque des revendications 1 à 7.

EP 2 751 904 B1

Fig. 1

Fig. 2A    Fig. 2B    Fig. 2C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2004207274 A
- US 4617484 A
- US 2011123339 A
- GB 2393586 A

### Non-patent literature cited in the description

- **CREMER, L. ; HECKL, M. ; UNGAR, E.E.** Structure-Borne Sound. Springer Verlag, 1987
- **EWINS, D.J.** Modal Testing, Theory, Practice, and Application. Research Studies Press ltd, 2001
- **GARIBALDI, L. ; ONAH, H.N.** Viscoelastic Material Damping Technology. Becchis Osiride, 1996
- **M. D. RAO.** RECENT APPLICATIONS OF VISCOELASTIC DAMPING FOR NOISE CONTROL IN AUTOMOBILES AND COMMERCIAL AIRPLANES. *JOURNAL OF SOUND AND VIBRATION,* 28 March 2003, vol. 262, 457-474